# EUROPEAN PATENT APPLICATION

(11) **EP 4 707 177 A1**
(43) Date of publication of application: **11.03.2026**
(21) Application number: 25200876.8
(22) Date of filing: 08.09.2025
(51) Int. Cl.: B64D 27/33, B64D 31/18, B64D 35/025, B64D 27/34, B64D 31/16

(54) **PROPULSION ASSEMBLY FOR AN AIRCRAFT AND METHODS FOR OPERATING SAME**

(30) Priority: 06.09.2024 US 202418827210
(71) Applicant: PRATT & WHITNEY CANADA CORP., Longueuil, Québec J4G 1A1 (CA)
(72) Inventor: FREER, Richard, (01BE5) Longueuil, J4G 1A1 (CA)
(74) Representative: Dehns

(57) **Abstract**

A propulsion assembly (20) includes a hybrid-electric propulsion system (22, 22A, 22B), an electrical distribution system (82), and a controller (28). The hybrid-electric propulsion system (22, 22A, 22B) includes an engine (34), a first electric motor (36), and a first propulsor (38). The engine (34) and the first electric motor (36) are couplable with the first propulsor (38) to drive rotation of the first propulsor (38). The electric propulsion system (24) includes a second electric motor (76) and a second propulsor (78). The second electric motor (76) is coupled with the second propulsor (78) to drive rotation of the second propulsor (78). The controller (28) is configured to: in a first flight mode, control the engine (34) to drive rotation of the first propulsor (38), and in a second flight mode, control the at least one first electric motor (36) to drive rotation of the first propulsor (38) with the engine (34) in a shutdown condition, and control the second electric motor (76) to drive rotation of the second propulsor (78).

## Description

### TECHNICAL FIELD

This disclosure relates to propulsion assemblies for aircraft and, more particularly, to a propulsion assembly including one or more hybrid-electric propulsion systems and one or more electric propulsion systems.

### BACKGROUND OF THE ART

Aircraft typically include propulsion systems configured to generate thrust to facilitate propulsion of the aircraft. Frequently, aircraft include more than one such propulsion system. Operation of the propulsion systems may consume substantial amounts of fuel and/or electrical power during flight. Various systems and methods for facilitating efficient use of fuel and electrical power by aircraft propulsion systems are known. While these known systems and methods may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present invention, a propulsion assembly for an aircraft includes a hybrid-electric propulsion system, an electric propulsion system, an electrical distribution system, and a controller. The hybrid-electric propulsion system includes an engine, at least one first electric motor, and a first propulsor. The engine and the at least one first electric motor are couplable with the first propulsor to drive rotation of the first propulsor. The electric propulsion system includes a second electric motor and a second propulsor. The second electric motor is coupled with the second propulsor to drive rotation of the second propulsor. The electrical distribution system electrically interconnects the at least one first electric motor and the second electric motor. The controller includes a processor connected in signal communication with a non-transitory member storing instructions which, when executed by the processor, cause the processor to: in a first flight mode, control the engine to drive rotation of the first propulsor, and in a second flight mode, control the at least one first electric motor to drive rotation of the first propulsor with the engine in a shutdown condition, and control the second electric motor to drive rotation of the second propulsor.

In an embodiment of the above, the instructions, when executed by the processor, may further cause the processor to control the propulsion assembly in the first flight mode for a first flight condition and control the propulsion assembly in the second flight mode for a second flight condition. The second flight condition may be different than the first flight condition.

In an embodiment according to any of the previous embodiments, the second flight condition may be a cruise flight condition or a descent flight condition.

In an embodiment according to any of the previous embodiments, the second flight condition may be a failure condition of the engine.

In an embodiment according to any of the previous embodiments, the instructions, when executed by the processor, may further cause the processor to, in the first flight mode, control the engine to drive rotation of the at least one first electric motor to generate electrical power for the electrical distribution system.

In an embodiment according to any of the previous embodiments, the hybrid-electric propulsion system may include a gear train coupling the engine and the at least one first electric motor with the first propulsor. The gear train may include a clutch assembly. The clutch assembly may be configurable to couple and decouple the engine from the at least one first electric motor.

In an embodiment according to any of the previous embodiments, the hybrid-electric propulsion system may have a first maximum thrust output, the electric propulsion system may have a second maximum thrust output, and the first maximum thrust output may be greater than the second maximum thrust output.

In an embodiment according to any of the previous embodiments, the instructions, when executed by the processor, may further cause the processor to, in the second flight mode: determine a combination of a propeller blade pitch of the first propulsor, a rotation speed of the first propulsor, and a torque of the first propulsor, within operating limits of the at least one first electric motor, corresponding to a maximum efficiency of the hybrid-electric propulsion system for a flight condition of the propulsion assembly, control the hybrid-electric propulsion system to operate at the propeller blade pitch, the rotation speed, and the torque corresponding to the maximum efficiency, and control the electric propulsion system to generate a target thrust of the propulsion assembly in combination with the hybrid-electric propulsion system operating at the propeller blade pitch, the rotation speed, and the torque corresponding to the maximum efficiency.

In an embodiment according to any of the previous embodiments, the instructions, when executed by the processor, may further cause the processor to, in the second flight mode: determine a thrust output to electric power consumption ratio of the hybrid-electric propulsion system, control a propeller blade pitch of the first propulsor to operate the hybrid-electric propulsion system at a maximum value of the thrust output to electric power consumption ratio, and control the electric propulsion system to generate a target thrust of the propulsion assembly in combination with the hybrid-electric propulsion system operating at the maximum value of the thrust output to electric power consumption ratio.

In an embodiment according to any of the previous embodiments, the instructions, when executed by the processor, may further cause the processor to, in the second flight mode: determine a thrust output to electric power consumption ratio of the electric propulsion system, control a rotation speed of the second propulsor to operate the electric propulsion system at a maximum value of the thrust output to electric power consumption ratio, and control the hybrid-electric propulsion system to generate a target thrust of the propulsion assembly in combination with the electric propulsion system operating at the maximum value of the thrust output to electric power consumption ratio.

In an embodiment according to any of the previous embodiments, the electric propulsion system may be a wingtip propulsion system.

According to another aspect of the present invention, a method for operating an aircraft propulsion assembly including at least one hybrid-electric propulsion system and at least one electric propulsion system includes selecting a second flight mode from a plurality of flight modes for the aircraft propulsion assembly. The plurality of flight modes includes at least a first flight mode and the second flight mode. The method further includes controlling the aircraft propulsion assembly, at a controller, in the second flight mode by: controlling at least one first electric motor of the hybrid-electric propulsion system to drive rotation of a first propulsor of the hybrid-electric propulsion system with an engine of the hybrid-electric propulsion system shutdown and controlling a second electric motor of the electric propulsion system to drive rotation of a second propulsor of the electric propulsion system. The at least one first electric motor and the engine are couplable with the first propulsor.

In an embodiment of the above, the method may further include controlling the aircraft propulsion assembly, at the controller, in the first flight mode by controlling the engine to drive rotation of the first propulsor and switching control of the aircraft propulsion assembly, at the controller, from the first flight mode to the second flight mode.

In an embodiment according to any of the previous embodiments, switching control of the aircraft propulsion assembly from the first flight mode to the second flight mode may include switching control of the aircraft propulsion assembly from the first flight mode to the second flight mode in response to a change in flight condition from a first flight condition to a second flight condition different than the first flight condition.

In an embodiment according to any of the previous embodiments, the first flight condition may be a high-power flight condition and the second flight condition may be a low-power flight condition.

In an embodiment according to any of the previous embodiments, switching control of the aircraft propulsion assembly from the first flight mode to the second flight mode may include switching control of the aircraft propulsion assembly from the first flight mode to the second flight mode in response to identifying a failure of the engine.

In an embodiment according to any of the previous embodiments, the method may further include switching control of the aircraft propulsion assembly, at the controller, from the second flight mode to the first flight mode by controlling the engine to drive rotation of the first propulsor.

In an embodiment according to any of the previous embodiments, controlling the aircraft propulsion assembly, at the controller, in the second flight mode may include determining a combination of a propeller blade pitch of the first propulsor, a rotation speed of the first propulsor, and a torque of the first propulsor corresponding to a maximum efficiency of the hybrid-electric propulsion system for a flight condition of the aircraft propulsion assembly, controlling the hybrid-electric propulsion system to operate at the propeller blade pitch, the rotation speed, and the torque corresponding to the maximum efficiency within operating limits of the at least one first electric motor, and controlling the electric propulsion system to generate a target thrust of the aircraft propulsion assembly in combination with the hybrid-electric propulsion system operating at the propeller blade pitch, the rotation speed, and the torque corresponding to the maximum efficiency.

In an embodiment according to any of the previous embodiments, controlling the aircraft propulsion assembly, at the controller, in the second flight mode may include: determining a thrust output to electric power consumption ratio of the hybrid-electric propulsion system, controlling a propeller blade pitch of the first propulsor to operate the hybrid-electric propulsion system at a maximum value of the thrust output to electric power consumption ratio, and controlling the electric propulsion system to generate a target thrust of the aircraft propulsion assembly in combination with the hybrid-electric propulsion system operating at the maximum value of the thrust output to electric power consumption ratio.

In an embodiment according to any of the previous embodiments, controlling the aircraft propulsion assembly, at the controller, in the second flight mode may include: determining a thrust output to electric power consumption ratio of the hybrid-electric propulsion system and the electric propulsion system and controlling the at least one first electric motor and the second electric motor to operate the hybrid-electric propulsion system and the electric propulsion system at a maximum value of the thrust output to electric power consumption ratio within operating limits of the at least one first electric motor and the second electric motor.

The present disclosure, and all its aspects, embodiments and advantages associated therewith will become more readily apparent in view of the detailed description provided below, including the accompanying drawings.

### DESCRIPTION OF THE DRAWINGS

FIG. 1 schematically illustrates an aircraft including a propulsion assembly including hybrid-electric propulsion systems and electric propulsion systems, in accordance with one or more embodiments of the present disclosure.
FIG. 2 schematically illustrates a cutaway, side view of a hybrid-electric propulsion system, in accordance with one or more embodiments of the present disclosure.
FIG. 3 schematically illustrates a side view of an electric propulsion system, in accordance with one or more embodiments of the present disclosure.
FIG. 4 illustrates a block diagram depicting a method for operating an aircraft propulsion assembly including one or more hybrid-electric propulsion systems and one or more electric propulsion systems, in accordance with one or more embodiments of the present disclosure.

### DETAILED DESCRIPTION

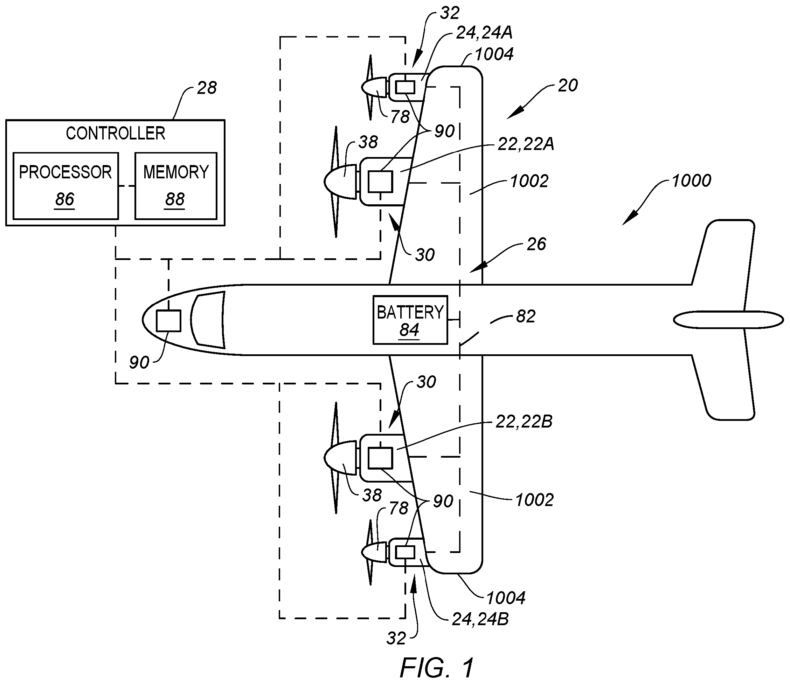

FIG. 1 illustrates an aircraft 1000 including a propulsion assembly 20. The aircraft 1000 of FIG. 1 is configured as a fixed-wing aircraft (e.g., an airplane). The aircraft 1000 may be a manned aerial vehicle or an unmanned aerial vehicle (UAV, e.g., a drone).

The propulsion assembly 20 includes at least one hybrid-electric propulsion system 22, at least one electric propulsion system 24, an electrical assembly 26, and a controller 28. The propulsion assembly 20 of FIG. 1 includes a first hybrid-electric propulsion system 22A and a second hybrid-electric propulsion system 22B mounted on opposing wings 1002 of the aircraft 1000. Similarly, the propulsion assembly 20 of FIG. 1 includes a first electric propulsion system 24A and a second electric propulsion system 24B mounted on opposing wings 1002. The present disclosure, however, is not limited to any particular quantity of the propulsion systems 22, 24 or mounting location of the propulsion systems 22, 24 on the aircraft 1000. Moreover, the present disclosure is not limited to an equal quantity of the hybrid-electric propulsion systems 22 and the electric propulsion systems 24 for the propulsion assembly 20.

The propulsion systems 22, 24 of FIG. 1 are arranged on the aircraft 1000 (e.g., the wings 1002) as inboard propulsion systems 30 and outboard propulsion systems 32. The inboard propulsion systems 30 of FIG. 1 include the hybrid-electric propulsion systems 22, 22A, 22B. The outboard propulsion systems 32 are disposed outward (e.g., laterally outward) of the inboard propulsion systems 30 on their respective wings 1002. The outboard propulsion system 32 may be configured as "wingtip" propulsion systems (e.g., wingtip-mounted propellers) disposed at (e.g., on, adjacent, or proximate) the wing tips 1004 of the respective wings 1002. The outboard propulsion systems 32 of FIG. 1 include the electric propulsion systems 24, 24A, 24B. Alternatively, in some embodiments, the inboard propulsion systems 30 may include the electric propulsion systems 24, 24A, 24B and the outboard propulsion systems 32 may include the hybrid-electric propulsion systems 22, 22A, 22B.

The hybrid-electric propulsion system 22 and the electric propulsion system 24 may have different thrust outputs (e.g., maximum thrust outputs). For example, the hybrid-electric propulsion system 22 may have a greater thrust output than the electric propulsion system 24, such that the hybrid-electric propulsion system 22 may generate the majority of propulsion assembly 20 thrust during high-power flight conditions of the aircraft 1000 (e.g., takeoff).

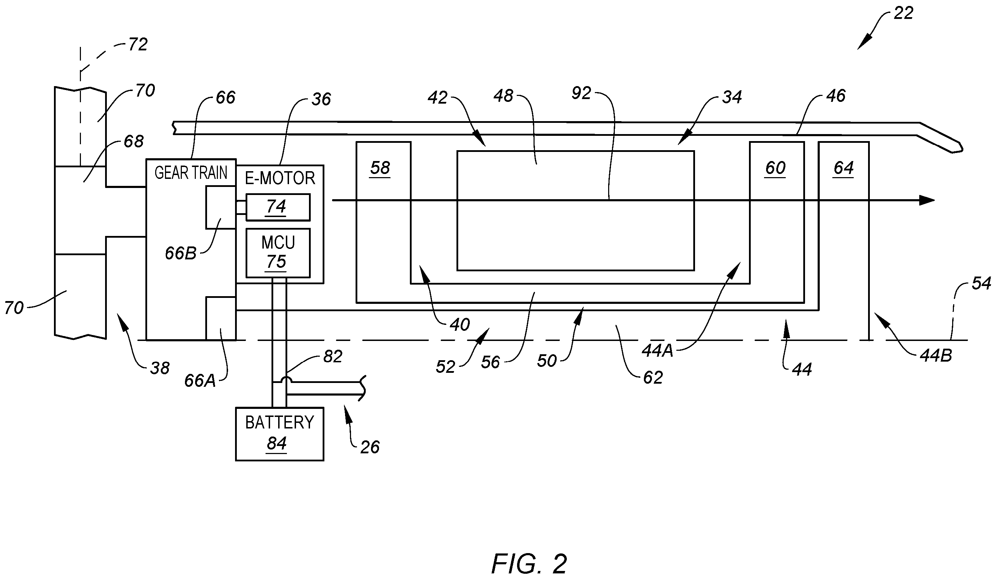

FIG. 2 schematically illustrates a cutaway, side view of the hybrid-electric propulsion system 22. As used herein, the term "hybrid-electric propulsion system" refers to a propulsion system including both a thermal engine 34 and at least one electric motor 36 coupled to a propulsor 38 of the hybrid-electric propulsion system 22. The thermal engine 34 and the electric motor 36 may be configured to drive rotation of the propulsor 38 independently or in combination to generate thrust for the aircraft 1000 (see FIG. 1). Accordingly, the hybrid-electric propulsion system 22 of FIG. 2 may be understood as a parallel hybrid-electric propulsion system.

The engine 34 of FIG. 2 is configured as a turboprop gas turbine engine. However, the present disclosure is not limited to any particular configuration of gas turbine engine for the hybrid-electric propulsion system 22, and examples of gas turbine engine configurations for the hybrid-electric propulsion system 22 may include, but are not limited to, a turbofan engine, a turbojet engine, a propfan engine, or the like. Moreover, the present disclosure is not limited to hybrid-electric propulsion system 22 including a gas turbine engine. For example, the engine 34 may alternatively be configured as an intermittent combustion engine such as, but not limited to, a rotary engine (e.g., a Wankel engine), a piston engine, or the like.

The engine 34 of FIG. 2 includes a compressor section 40, a combustor section 42, a turbine section 44, and an engine static structure 46. The combustor section 42 includes a combustor 48 (e.g., an annular combustor). The turbine section 44 includes a high-pressure turbine section 44A and a power turbine section 44B.

Components of the compressor section 40 and/or the turbine section 44 form a first rotational assembly 50 (e.g., a high-pressure spool) and a second rotational assembly 52 of the engine 34. The first rotational assembly 50 and the second rotational assembly 52 are mounted for rotation about a rotational axis 54 (e.g., an axial centerline) of the engine 34 relative to the engine static structure 46.

The first rotational assembly 50 includes a first shaft 56, a bladed compressor rotor 58 for the compressor section 40, and a bladed first turbine rotor 60 for the high-pressure turbine section 44A. The first shaft 56 interconnects the bladed compressor rotor 58 and the bladed first turbine rotor 60.

The second rotational assembly 52 includes a second shaft 62 and a bladed second turbine rotor 64 for the power turbine section 44B. The second shaft 62 is connected to the bladed second turbine rotor 64. The second shaft 62 operably connects (e.g., directly or indirectly connects) the bladed second turbine rotor 64 with the propulsor 38.

The engine static structure 46 includes, but is not limited to, engine casings, cowlings, and other fixed (e.g., non-rotating) structures of the engine 34 which house and/or support (e.g., rotationally support) components of the engine 34 such as, but not limited to, those of the compressor section 40, the combustor section 42, and the turbine section 44. The engine static structure 46 of FIG. 2 includes a gear train 66 coupling the second shaft 62 and the propulsor 38. For example, the gear train 66 may include a gear assembly (e.g., an epicyclic gear assembly) coupling the second shaft 62 and the propulsor 38. The gear assembly may be a reduction gear assembly configured to drive rotation of the propulsor 38 at a reduced rotational speed relative to the second shaft 62. Of course, the second shaft 62 may alternatively be directly connected to the propulsor 38 to drive the propulsor 38 at the same rotational speed as the second shaft 62. The gear train 66 may include a clutch assembly 66A (e.g., a sprag clutch assembly, a coupling-decoupling clutch assembly, or the like) configured to selectively couple or decouple the second shaft 62 from the propulsor 38. For example, the clutch assembly 66A may be configured to couple the second shaft 62 with the propulsor 38 to drive rotation of the propulsor 38 and, in some flight modes, to decouple the second shaft 62 from the propulsor 38 and the electric motor 36 to prevent the electric motor 36 from driving rotation of the second shaft 62. The gear train 66 may additionally or alternatively include a clutch assembly 66B (e.g., a sprag clutch assembly, a coupling-decoupling clutch assembly, or the like) configured to selectively couple or decouple the electric motor 36 (e.g., a rotor of the electric motor 36) from the second shaft 62, thereby avoiding drag on the second rotational assembly 52 when the electric motor 36 is not in use.

The propulsor 38 is configured for rotation about a rotational axis. The rotational axis of the propulsor 38 may be the rotational axis 54, or another rotational axis which is different than the rotational axis 54. The propulsor 38 of FIG. 2 is configured as a propeller. The present disclosure, however, is not limited to propeller configurations for the propulsor 38 and the propulsor 38 may alternatively be configured as a fan (e.g., for a turbofan propulsion system), an open rotor propulsor, or another configuration of aircraft propulsion rotor. The propulsor 38 of FIG. 2 includes a hub 68 and a plurality of propeller blades 70. The propeller blades 70 are mounted to and circumferentially distributed about the hub 68. The propulsor 38 may be configured as a variable-geometry propulsor. For example, the propeller blades 70 of FIG. 2 may be configured as variable-pitch propeller blades. The propeller blades 70 may be rotatable about a lengthwise axis 72 to control (e.g., selectively vary) a pitch (e.g., an angle; sometimes referred to as a "beta angle") of the propeller blades 70 as shown, for example, in FIG. 2. However, the present disclosure is not limited to propulsors having variable-pitch propeller blades, and other variable-geometry propulsor configurations, such as propulsors having otherwise movable blades or air flow surfaces or ducted propulsors having variable-geometry ducting, may also be considered within the scope of the present disclosure.

The electric motor 36 includes a rotor 74 and a motor control unit (MCU) 75. The rotor 74 may be coupled to the propulsor 38 by the gear train 66, as shown in FIG. 2. For example, the gear train 66 may couple both of the second shaft 62 and the rotor 74 to the propulsor 38 to facilitate driving rotation of the propulsor 38 with the bladed second turbine rotor 64 (e.g., via the second shaft 62), the electric motor 36 (e.g., the rotor 74), or a combination of the bladed second turbine rotor 64 and the electric motor 36. Alternatively, the rotor 74 may be coupled to the propulsor 38 independent of the gear train 66 (e.g., directly coupled, coupled by a discrete gear train, etc.). The motor control unit 75 is electrically connected to the electrical assembly 26 and configured to control an amount, a direction, and/or a frequency of electrical current flow to or from the electric motor 36 to control operation of the rotor 74. The electric motor 36 may additionally be operable as a generator. For example, the rotor 74 may be configured to be rotationally driven by the bladed second turbine rotor 64, through the gear train 66, to cause the electric motor 36 to generate electrical power and supply the electrical power to the electrical assembly 26.

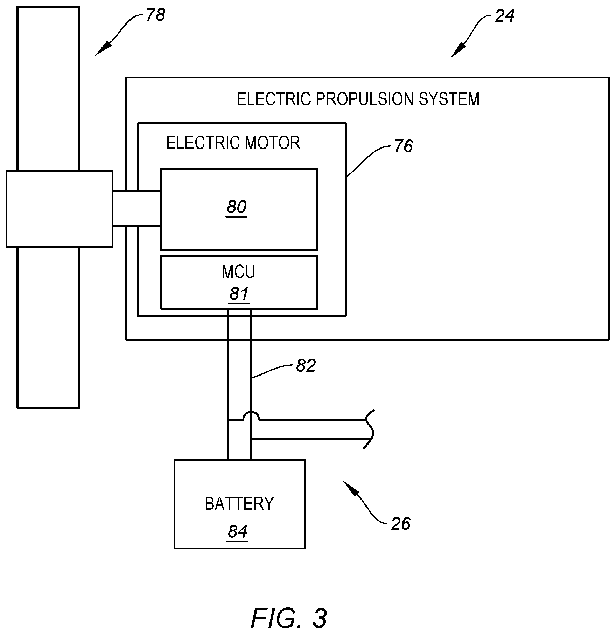

FIG. 3 schematically illustrates a cutaway, side view of the electric propulsion system 24. As used herein, the term "electric propulsion system" refers to a propulsion system including an electric motor 76 coupled to a propulsor 78 (e.g., a propeller) of the electric propulsion system 24. The electric propulsion system 24 does not include a thermal engine (e.g., the engine 34) coupled with the propulsor 78. The electric motor 76 is configured to drive rotation of the propulsor 78 to generate thrust for the aircraft 1000 (see FIG. 1). The electric motor 76 includes a rotor 80 and a motor control unit 81. The rotor 80 is coupled to the propulsor 78. For example, the rotor 80 may be directly coupled to the propulsor 78 such that the rotor 80 and the propulsor 78 rotate at a same rotation speed. Alternatively, the rotor 80 may be coupled to the propulsor 78 by a gear train (not shown) to drive rotation of the propulsor 78 at a different rotation speed than the rotor 80. The motor control unit 81 is electrically connected to the electrical assembly 26 and configured to control an amount, a direction, and/or a frequency of electrical current flow to or from the electric motor 76 to control operation of the rotor 80. The propulsor 78 may have a variable-geometry configuration similar to that described above for the propulsor 38, however, the present disclosure is not limited the propulsor 78 having a variable-geometry configuration.

Referring to FIGS. 1-3, the electrical assembly 26 includes an electrical distribution system 82 and a battery 84. The electrical assembly 26 further includes the electric motor 36 and the electric motor 76.

The electrical distribution system 82 electrically connects components of the electrical assembly 26 including, but not limited to, the electric motor 36, the electric motor 76, and the battery 84. The electrical distribution system 82 includes switchgear, cables, wires, breakers, switches, electrical power conditional and/or conversion (e.g., alternating current (AC) to direct current (DC) or DC to AC conversion) components, and/or other electrical components to effect the transfer of electrical power between components of the electrical assembly 26, and to monitor the operation and electrical characteristics of the components of the electrical assembly 26. The electrical distribution system 82 may electrically interconnect two or more, or each of the propulsion systems 22, 24 of the propulsion assembly 20 (see FIG. 1). The electrical distribution system 82 may include one or more electrical power controllers to control a magnitude and/or direction of electrical current flow to components of the electrical assembly 26. The electrical distribution system 82 may additionally be configured to supply electrical power to electrical loads of the aircraft 1000 such as, but not limited to, an environmental control system (ECS), landing gear actuators and other electro-mechanical actuators, lightings systems, and other electrical or electronic aircraft systems (e.g., directly or by DC-DC or DC-AC convertors).

The battery 84 is electrically connected to the electrical distribution system 82 (e.g., directly, as shown in FIG. 2, or by a DC-DC converter). The battery 84 is configured to selectively supply electrical power to the electrical distribution system 82 independently (e.g., as a single power source for the electrical assembly 26) or in combination with one or more other electrical power sources (e.g., an electrical generator) of the propulsion assembly 20 or the aircraft 1000 (see FIG. 1). The battery 84 may be disposed within a portion of the aircraft 1000 (e.g., a fuselage) outside of the propulsion systems 22, 24. The battery 84 may include a plurality of battery modules (e.g., battery packs), battery cells, and/or the like electrically connected together in series and/or parallel as necessary to configure the battery 84 with the desired electrical characteristics (e.g., voltage output, current output, storage capacity, etc.) for operation of the electrical distribution system 82. The present disclosure is not limited to any particular configuration of the battery 84. The battery 84 (e.g., and its battery cells) may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like.

Referring again to FIG. 1, the controller 28 is connected in signal communication with components of the hybrid-electric propulsion system 22 and the electric propulsion system 24 to control or otherwise facilitate operation (e.g., power output, thrust, etc.) of the hybrid-electric propulsion system 22 and the electric propulsion system 24. The controller 28 may form or otherwise include a single control unit configured to control the propulsion systems 22, 24 to perform the functions described herein. Alternatively, the controller 28 may form or otherwise include a plurality of discrete control units connected together in signal communication and configured to collectively control the propulsion systems 22, 24 to perform the functions described herein. The controller 28 (or each of the control units) includes a processor 86 connected in signal communication with memory 88. The processor 86 may include any type of computing device, computational circuit, processor(s), CPU, computer, or the like capable of executing a series of instructions that are stored in the memory 88. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 28 to accomplish the same algorithmically and/or by coordination of propulsion assembly 20 components. The memory 88 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 28. The controller 28 may include, or may be in communication with, an input device that enables a user to enter data and/or instructions, and may include, or be in communication with, an output device configured, for example to display information (e.g., a visual display or a printer), or to transfer data, etc. Communications between the controller 28 and components of the propulsion assembly 20 may be via a hardwire connection or via a wireless connection. A person of skill in the art will recognize that portions of the controller 28 may assume various forms (e.g., digital signal processor, analog device, etc.) capable of performing the functions described herein.

The controller 28 may form or otherwise be part of an electronic engine controller (EEC) for the engine 34. The EEC may control operating parameters of the engine 34 including, but not limited to, fuel flow, stator vane position (e.g., variable compressor inlet guide vane (IGV) position), compressor air bleed valve position, shaft (e.g., first shaft 56 and/or second shaft 62) torque and/or rotation speed, propeller blade 70 pitch, etc. so as to control an engine power or performance of the hybrid-electric propulsion system 22. In some embodiments, the EEC may be part of a full authority digital engine control (FADEC) system for the engine 34.

The controller 28 may include and/or be connected in direct or indirect signal communication with a sensor assembly 90 for the propulsion assembly 20. The sensor assembly 90 includes a plurality of sensors configured to measure operating parameters of the hybrid-electric propulsion system 22, the electric propulsion 24, and the aircraft 1000 to facilitate operation and control of the propulsion assembly 20 by the controller 28. Examples of the operating parameters measured by the sensor assembly 90 include propeller blade 70 pitch, shaft 56, 62 rotation speed (e.g., revolutions per minute (RPM)), shaft 56,62 torque, rotor 74, 80 rotation speed (e.g., RPM), rotor 74, 80 torque, aircraft 1000 and/or propulsor 38, 78 inflow airspeed, aircraft 1000 airspeed, altitude, ambient air temperature, electrical power output (e.g., consumption) of the electrical assembly 26 and/or components of the electrical assembly (e.g., the electric motor 36 and/or the electric motor 76), charge and discharge rates of the battery 84, and the like. Of course, the present disclosure is not limited to the foregoing exemplary operating parameters measured by the sensor assembly 90.

During operation of the propulsion assembly 20, one or both of the hybrid-electric propulsion system 22 and the electric propulsion system 24 may operate to facilitate propulsion of the aircraft 1000. For the hybrid-electric propulsion system 22 of FIG. 2, ambient air enters the hybrid-electric propulsion system 22 through an air intake into and through a core flow path 92 of the engine 34. The ambient air flow along the core flow path 92 is compressed in the compressor section 40 and directed into the combustor 48. Fuel is injected into the combustor 48 and mixed with the compressed air to provide a fuel-air mixture. This fuel-air mixture is ignited, and combustion products thereof flow through the high-pressure turbine section 44A and the power turbine section 44B and are exhausted from the hybrid-electric propulsion system 22. The bladed first turbine rotor 60 and the bladed second turbine rotor 64 rotationally drive the first rotational assembly 50 and the second rotational assembly 52, respectively, in response to the combustion gas flow through the high-pressure turbine section 44A and the power turbine section 44B. The second rotational assembly 52 (e.g., the second shaft 62) may drive rotation of the propulsor 38, for example, through the gear train 66. The electric motor 36 may be selectively operated (e.g., electrically driven) to drive rotation of the propulsor 38 independently or in combination with the engine 34. The electric motor 76 of the electric propulsion system 24 may be selectively operated to drive rotation of the propulsor 78.

During operation of the aircraft 1000 in flight, the aircraft 1000 may operate under different flight conditions corresponding to different operational modes of the propulsion assembly 20 and its propulsion systems 22, 24. During some flight conditions such as takeoff, climb, diversion, go-around, or the like, the engine 34 of the hybrid-electric propulsion system(s) 22 may operate to drive rotation of the propulsor 38. For example, the engine 34 may operate as the primary source of power for propulsion (e.g., thrust generation) of the aircraft 1000. The engine 34 may additionally operate to drive rotation of the electric motor 36 to generate electrical power for the electrical distribution system 82 and/to facilitate charging of the battery 84.

During some other flight conditions such as cruise or descent, the engine 34 may be shutdown to preserve fuel (e.g., for reserves) and to avoid operation of the engine 34 during low-power flight conditions during which the engine 34 may otherwise operate at a reduced efficiency. The term "shutdown," as used herein, may refer to a condition of the engine 34 in which fuel flow to the engine 34 (e.g., the combustor 48) is stopped such that the engine 34 is not driven by a combustion process or cycle. With the engine 34 shutdown, the electric propulsion system(s) 24 may continue to operate to provide all or substantially all thrust of the propulsion assembly 20 necessary for the flight condition of the aircraft 1000. In this condition, an idled propulsor 38 of the hybrid-electric propulsion system(s) 22 may present a substantial aerodynamic drag, thereby reducing propulsion assembly 20 efficiency. The propeller blades 70 of the propulsor 38 may be feathered (e.g., positioned parallel to oncoming air flow) to reduce this aerodynamic drag of the idled propulsor 38, however, the feathered propeller blades 70 still present a meaningful aerodynamic drag without any countervailing contribution to aircraft 1000 propulsion. As an alternative to shutting down the engine 34, fuel flow to the engine 34 may be reduced to a level below a fuel flow rate needed by the engine 34 to drive rotation of the propulsor 38 at a target rotation speed. For example, the engine 34 may be supplied with fuel at a minimum fuel flow rate needed to maintain a stable flame in the combustor 48 and/or to maintain a minimum bladed compressor rotor 58 rotation speed. In this condition, the electric motor 36 may operate to drive rotation of the propulsor 38 at the target rotation speed alone or in combination with the engine 34.

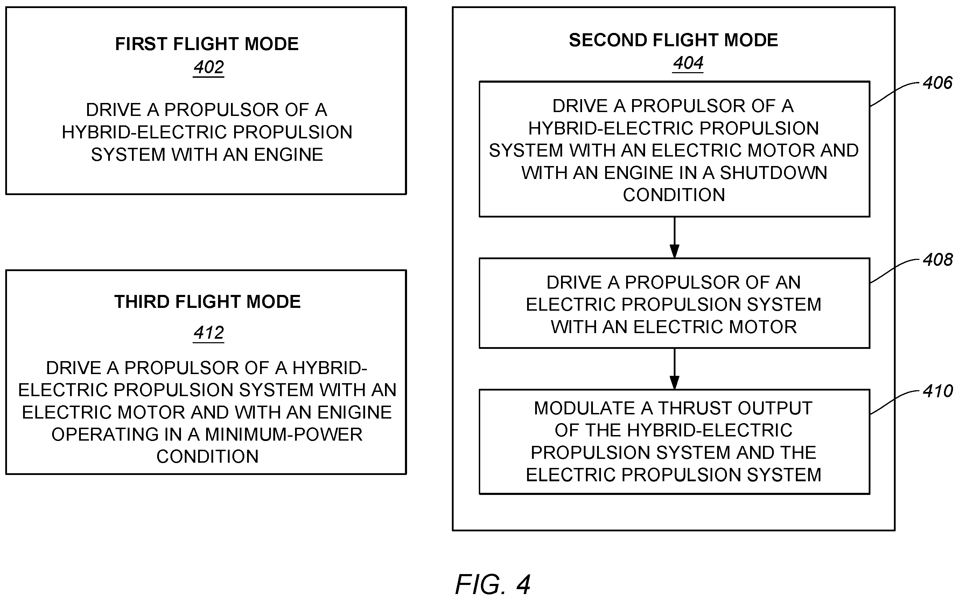

Referring to FIGS. 1-4, a method 400 for operating an aircraft propulsion assembly (e.g., the propulsion assembly 20) including one or more hybrid-electric propulsion systems and one or more electric propulsion systems is provided. FIG. 4 illustrates a flowchart for the method 400. The method 400 is described herein for the propulsion assembly 20 and its propulsion systems 22, 24. The present disclosure method 400, however, is not limited to use with the propulsion assembly 20 and propulsion systems 22, 24 described herein. For ease of explanation, the method 400 will be described for a propulsion assembly including one of the hybrid-electric propulsion systems 22 and one of the electric propulsion systems 24. However, aspects of the present disclosure method 400 are equally applicable to propulsion assemblies including more than one of the hybrid-electric propulsion systems 22 and/or more than one of the electric propulsion systems 24. The controller 28 (e.g., the processor 86) may execute instructions stored in the memory 88, thereby causing the controller 28 (e.g., the processor 86) to perform and/or control one or more steps or portions of steps of the method 400. Unless otherwise noted herein, it should be understood that the steps of method 400 are not required to be performed in the specific sequence in which they are discussed below and, in some embodiments, the steps of method 400 may be performed separately or simultaneously.

The propulsion assembly 20 may be selectively operated in one of a plurality of different flight modes, which flight modes may be optimized for different operating conditions of the aircraft 1000 in flight. In particular, the method 400 may include selective operation of the propulsion assembly 20 in a first flight mode 402 or a second flight mode 404. For example, the controller 28 may control operation of the hybrid-electric propulsion system 22 and the electric propulsion system 24 in accordance with the first flight mode 402 or the second flight mode 404 and may change between the first flight mode 402 and the second flight mode 404 (or other flight modes) for varying operating conditions of the aircraft 1000 in flight.

For the first flight mode 402, the controller 28 controls the engine 34 to drive rotation of the propulsor 38. The controller 28 may additionally control the electric motor 36 to drive rotation of the propulsor 38 in combination with the engine 34 (e.g., through the gear train 66). The controller 28 may alternatively control the hybrid-electric propulsion system 22 such that the engine 34 drives rotation of the electric motor 36 to generate electrical power for the electrical distribution system 82 and/to facilitate charging of the battery 84, as previously discussed. In this first flight mode 402, the controller 28 may control the electric propulsion system 24 to generate additional thrust for the aircraft 1000 or to remain idle (e.g., the electric motor 76 deenergized). For example, the electric propulsion system 24 may generate supplemental thrust for the aircraft 1000 in combination with the hybrid-electric propulsion system 22. In some embodiments, where the electric propulsion system 24 is disposed at (e.g., on, adjacent, or proximate) the wing tip 1004 of one of the wings 1002 (e.g., a wingtip-mounted propeller), the controller 28 may control the electric motor 76 to drive rotation of the propulsor 78 (e.g., at a reduced rotational speed) to reduce aerodynamic drag exhibited by the wings 1002 at (e.g., on, adjacent, or proximate) the wing tips 1004. The controller 28 may control the propulsion assembly 20 in the first flight mode 402 during flight conditions such as, but not limited to, takeoff, climb, diversion, go-around, or other flight conditions requiring relatively higher thrust for the aircraft 1000.

For the second flight mode 404, in step 406, the controller 28 controls the electric motor 36 to drive rotation of the propulsor 38 with the engine 34 in a shutdown condition, thereby preventing or reducing the drag penalty which might otherwise be presented by the propulsor 38 in an idled condition while the engine 34 is in the shutdown condition. In the shutdown condition, the engine 34 (e.g., the second shaft 62) may be decoupled from the propulsor 38 and/or the gear train 66 by a clutch assembly, as described above, to reduce mechanical loading on the electric motor 36. In step 408, the controller 28 further controls the electric motor 76 to drive rotation of the propulsor 78. Accordingly, in the second flight mode 404, all thrust generated by the propulsion assembly 20 is generated through operation of the electrical assembly 26 to drive rotation of the propulsors 38, 78 with the electric motors 36, 76, respectively. The controller 28 may additionally control the propulsion assembly 20 to operate in the second flight mode 404 in response to an identified failure or other malfunction of the engine 34.

Step 410 includes controlling the hybrid-electric propulsion system 22 and the electric propulsion system 24 to modulate a thrust output of the propulsor 38 and the propulsor 78, respectively. For example, the controller 28 may control the hybrid-electric propulsion system 22 and the electric propulsion system 24 to minimize propulsor 38, 78 drag, thereby facilitating improvement in overall propulsion assembly 20 efficiency.

Step 410 may include identifying one or more output parameters of the propulsor 38 (e.g., propeller blade 70 pitch, propulsor 38 rotation speed, propulsor 38 torque, etc.) and one or more output parameters of the propulsor 78 (e.g., propeller blade pitch, propulsor 78 torque, efficiency, thrust, etc.) corresponding to (e.g., optimized for) a target thrust of the propulsion assembly 20, a current flight condition of the aircraft 1000, and ambient conditions (e.g., atmospheric conditions) for the aircraft 1000. The controller 28 may calculate or otherwise determine a propulsor efficiency of the propulsor 38 for the flight condition (e.g., cruise) and the ambient conditions of the aircraft 1000 over a plurality of different, possible propulsor 38 rotation speeds and/or propeller blade 70 pitch settings. These ambient conditions may include, but are not limited to, propulsor 38 inflow airspeed, altitude, ambient air temperature. Values of the ambient conditions may be measured, for example, by the controller 28 and the sensor assembly 90. Additionally or alternatively, values of the ambient conditions may be assumed or approximated based on the current flight condition of the aircraft 1000. Using the propulsor efficiency of the propulsor 38 (e.g., for a plurality of different propulsor 38 rotation speeds and/or propeller blade 70 pitch settings), the controller 28 may calculate or otherwise determine (e.g., using lookup tables) a propulsor 38 torque for combinations (e.g., each combination) of propeller blade 70 pitch and propulsor 38 rotation speed. Alternatively, the controller 28 may calculate or otherwise determine (e.g., using lookup tables) a propulsor 38 torque for combinations (e.g., each combination) of propeller blade 70 pitch, propulsor 38 rotation speed, and/or propulsor 38 air inflow, and calculate the propulsor efficiency (e.g., by dividing predicted thrust by predicted torque) for each of the combinations. For combinations (e.g., each combination) of the propulsor 38 torque and the propulsor 38 rotation speed, which are possible with the hybrid-electric propulsion system 22, the controller 28 may calculate or otherwise determine an electric motor efficiency of the electric motor 36. The controller 28 may calculate or otherwise determine an overall efficiency for the hybrid-electric propulsion system 22 operating in the second flight mode 404, for combinations (e.g., each combination) of the propeller blade 70 pitch, the propulsor 38 rotation speed, and the propulsor 38 torque, using (e.g., the multiple of) the propulsor efficiency (e.g., thrust per torque) and the electric motor efficiency (e.g., torque per electrical power consumption). The combination of the propeller blade 70 pitch, the propulsor 38 rotation speed, and the propulsor 38 torque which produces a maximum efficiency for the given target thrust of the hybrid-electric propulsion system 22, and are within operating limits (e.g., rotation speed and torque operating limits) of the electric motor 36, may be selected by the controller 28 and the controller 28 may control the propulsor 38 and the electric motor 36 to operate at the selected propeller blade 70 pitch, propulsor 38 rotation speed, and propulsor 38 torque. In a similar fashion, the controller 28 may estimate or otherwise determine efficiency or torque of the propulsor 78 considering propulsor 78 air inflow speed and possible combinations of propulsor 78 pitch and rotation speed. The controller 28 may control the electric propulsion system 24 (e.g., a rotation speed of the propulsor 78 driven by the electric motor 76) to generate the target thrust of the propulsion assembly 20 in combination with the hybrid-electric propulsion system 22.

Step 410 may alternatively include measuring or otherwise determining a thrust output to electrical power output ratio (e.g., a thrust:kilowatt (kW) ratio) for the hybrid-electric propulsion system 22. The controller 28 may measure or otherwise determine the thrust output to electrical power output ratio, for example, by estimating a thrust output of the hybrid-electric propulsion system 22 (e.g., using performance charts or lookup tables, aircraft 1000 airspeed, propulsor 38 rotation speed, altitude, and/or ambient air temperature) and dividing the thrust output by the measured electrical power output of the electric motor 36. The controller 28 may control the propulsor 38 to modulate the propeller blade 70 pitch to operate the hybrid-electric propulsion system 22 at a maximum value of the thrust output to electrical power ratio (e.g., within operating limits of the electric motor 36). The controller 28 may control the electric propulsion system 24 (e.g., a rotation speed of the propulsor 78 driven by the electric motor 76) to generate the target thrust of the propulsion assembly 20 in combination with the hybrid-electric propulsion system 22.

Step 410 may alternatively include measuring or otherwise determining a thrust output to electrical power output ratio (e.g., a thrust:kilowatt (kW) ratio) for the electric propulsion system 24. The controller 28 may measure or otherwise determine the thrust output to electrical power output ratio using, for example, by estimating a thrust output of the electric propulsion system 24 (e.g., using performance charts or lookup tables, aircraft 1000 airspeed, propulsor 38 rotation speed, altitude, and/or ambient air temperature) and dividing the thrust output by the measured electrical power output of the electric motor 76. The controller 28 may control the electric motor 76 to modulate the rotation speed of the propulsor 78 to operate the electric propulsion system 24 at a maximum value of the thrust output to electrical power ratio, within operating limits (e.g., rotation speed and torque operating limits) of the electric motor 76. The controller 28 may control the hybrid-electric propulsion system 22 (e.g., the propeller blade 70 pitch, the propulsor 38 rotation speed, and/or the propulsor 38 torque) to generate the target thrust of the propulsion assembly 20 in combination with the electric propulsion system 24.

Step 410 may alternatively include measuring or otherwise determining a thrust output to electrical power output ratio (e.g., a thrust:kilowatt (kW) ratio) for each of the propulsion systems 22, 24 of the propulsion assembly 20, for example, as described above. The controller 28 may control the hybrid-electric propulsion system 22 and the electric propulsion system 24 to operate the propulsion assembly 20 at a maximum value of a combined thrust output to electrical power ratio for each of the propulsion systems 22, 24 of the propulsion assembly 20 to achieve the target thrust of the propulsion assembly 20 (e.g., within operating limits of the electric motors 36, 76).

In some embodiments, the method 400 may include selective operation of the propulsion assembly 20 in the first flight mode 402, the second flight mode 404, or a third flight mode 412. In the third flight mode 412, the controller 28 may control fuel flow to the engine 34 at a flow rate which is less than a fuel flow rate needed by the engine 34 to drive rotation of the propulsor 38 at a target rotation speed or to generate a target thrust. The controller 28 may control a fuel flow to the engine 34 to supply the engine 34 with fuel at a minimum fuel flow rate needed to maintain a stable flame in the combustor 48 and/or to maintain a minimum bladed compressor rotor 58 rotation speed. The controller 28 may control the clutch assembly 66A to decouple the second shaft 62 from the propulsor 38. Alternatively, for some clutch assembly 66A configurations (e.g., a sprag clutch assembly), the clutch assembly 66A may decouple the second shaft 62 from the propulsor 38 as a result of a reduced rotational speed of the second shaft 62 relative to the propulsor 38. The controller 28 may control the electric motor 36 to drive rotation of the propulsor 38 at the target rotation speed (or to generate the target thrust) with the engine 34 (e.g., the second shaft 62) decoupled from the propulsor 38. Alternatively, the controller 28 may control the electric motor 36 to operate to drive rotation of the propulsor 38 at the target rotation speed in combination with the engine 34.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion assembly (20) for an aircraft (1000), the propulsion assembly (20) comprising:
a hybrid-electric propulsion system (22, 22A, 22B) including an engine (34), at least one first electric motor (36), and a first propulsor (38), the engine (34) and the at least one first electric motor (36) couplable with the first propulsor (38) to drive rotation of the first propulsor (38);
an electric propulsion system (24), such as a wingtip propulsion system, including a second electric motor (76) and a second propulsor (78), the second electric motor (76) coupled with the second propulsor (78) to drive rotation of the second propulsor (78);
an electrical distribution system (82) electrically interconnecting the at least one first electric motor (36) and the second electric motor (76); and
a controller (28) including a processor (86) connected in signal communication with a non-transitory member storing instructions which, when executed by the processor (86), cause the processor (86) to:
in a first flight mode, control the engine (34) to drive rotation of the first propulsor (38), and
in a second flight mode, control the at least one first electric motor (36) to drive rotation of the first propulsor (38) with the engine (34) in a shutdown condition, and control the second electric motor (76) to drive rotation of the second propulsor (78).

2. The propulsion assembly (20) of claim 1, wherein the instructions, when executed by the processor (86), further cause the processor (86) to control the propulsion assembly (20) in the first flight mode for a first flight condition and control the propulsion assembly (20) in the second flight mode for a second flight condition, and the second flight condition is different than the first flight condition, optionally wherein the second flight condition is a cruise flight condition, a descent flight condition, or a failure condition of the engine (34).

3. The propulsion assembly (20) of claim 1 or 2, wherein the instructions, when executed by the processor (86), further cause the processor (86) to, in the first flight mode, control the engine (34) to drive rotation of the at least one first electric motor (36) to generate electrical power for the electrical distribution system (82).

4. The propulsion assembly (20) of claim 1, 2 or 3, wherein the hybrid-electric propulsion system (22, 22A, 22B) includes a gear train (66) coupling the engine (34) and the at least one first electric motor (36) with the first propulsor (38), the gear train (66) includes a clutch assembly (66B), and the clutch assembly (66B) is configurable to couple and decouple the engine (34) from the at least one first electric motor (36).

5. The propulsion assembly (20) of any preceding claim, wherein the hybrid-electric propulsion system (22, 22A, 22B) has a first maximum thrust output, the electric propulsion system (24) has a second maximum thrust output, and the first maximum thrust output is greater than the second maximum thrust output.

6. The propulsion assembly (20) of any preceding claim, wherein the instructions, when executed by the processor (86), further cause the processor (86) to, in the second flight mode:
determine a combination of a propeller blade pitch of the first propulsor (38), a rotation speed of the first propulsor (38), and a torque of the first propulsor (38), within operating limits of the at least one first electric motor (36), corresponding to a maximum efficiency of the hybrid-electric propulsion system (22, 22A, 22B) for a flight condition of the propulsion assembly (20);
control the hybrid-electric propulsion system (22, 22A, 22B) to operate at the propeller blade pitch, the rotation speed, and the torque corresponding to the maximum efficiency; and
control the electric propulsion system (24) to generate a target thrust of the propulsion assembly (20) in combination with the hybrid-electric propulsion system (22, 22A, 22B) operating at the propeller blade pitch, the rotation speed, and the torque corresponding to the maximum efficiency.

7. The propulsion assembly (20) of any of claims 1 to 5, wherein the instructions, when executed by the processor (86), further cause the processor (86) to, in the second flight mode:
determine a thrust output to electric power consumption ratio of the hybrid-electric propulsion system (22, 22A, 22B);
control a propeller blade pitch of the first propulsor (38) to operate the hybrid-electric propulsion system (22, 22A, 22B) at a maximum value of the thrust output to electric power consumption ratio; and
control the electric propulsion system (24) to generate a target thrust of the propulsion assembly (20) in combination with the hybrid-electric propulsion system (22, 22A, 22B) operating at the maximum value of the thrust output to electric power consumption ratio, and/or
wherein the instructions, when executed by the processor (86), further cause the processor (86) to, in the second flight mode:
determine a thrust output to electric power consumption ratio of the electric propulsion system (24);
control a rotation speed of the second propulsor (78) to operate the electric propulsion system (24) at a maximum value of the thrust output to electric power consumption ratio; and
control the hybrid-electric propulsion system (22, 22A, 22B) to generate a target thrust of the propulsion assembly (20) in combination with the electric propulsion system (24) operating at the maximum value of the thrust output to electric power consumption ratio.

8. A method for operating an aircraft propulsion assembly (20) including at least one hybrid-electric propulsion system (22, 22A, 22B) and at least one electric propulsion system (24), the method comprising:
selecting a second flight mode from a plurality of flight modes for the aircraft propulsion assembly (20), the plurality of flight modes including at least a first flight mode and the second flight mode; and
controlling the aircraft propulsion assembly (20), at a controller (28), in the second flight mode by:
controlling at least one first electric motor (36) of the hybrid-electric propulsion system (22, 22A, 22B) to drive rotation of a first propulsor (38) of the hybrid-electric propulsion system (22, 22A, 22B) with an engine (34) of the hybrid-electric propulsion system (22, 22A, 22B) shutdown, and the at least one first electric motor (36) and the engine (34) are couplable with the first propulsor (38); and
controlling a second electric motor (76) of the electric propulsion system (24) to drive rotation of a second propulsor (78) of the electric propulsion system (24).

9. The method of claim 8, further comprising:
controlling the aircraft propulsion assembly (20), at the controller (28), in the first flight mode by controlling the engine (34) to drive rotation of the first propulsor (38); and
switching control of the aircraft propulsion assembly (20), at the controller (28), from the first flight mode to the second flight mode.

10. The method of claim 9, wherein switching control of the aircraft propulsion assembly (20) from the first flight mode to the second flight mode includes switching control of the aircraft propulsion assembly (20) from the first flight mode to the second flight mode in response to a change in flight condition from a first flight condition to a second flight condition different than the first flight condition, optionally wherein the first flight condition is a high-power flight condition and the second flight condition is a low-power flight condition.

11. The method of claim 9 or 10, wherein switching control of the aircraft propulsion assembly (20) from the first flight mode to the second flight mode includes switching control of the aircraft propulsion assembly (20) from the first flight mode to the second flight mode in response to identifying a failure of the engine (34).

12. The method of any of claims 8 to 11, further comprising switching control of the aircraft propulsion assembly (20), at the controller (28), from the second flight mode to the first flight mode by controlling the engine (34) to drive rotation of the first propulsor (38).

13. The method of any of claims 8 to 12, wherein controlling the aircraft propulsion assembly (20), at the controller (28), in the second flight mode includes:
determining a combination of a propeller blade pitch of the first propulsor (38), a rotation speed of the first propulsor (38), and a torque of the first propulsor (38) corresponding to a maximum efficiency of the hybrid-electric propulsion system (22, 22A, 22B) for a flight condition of the aircraft propulsion assembly (20);
controlling the hybrid-electric propulsion system (22, 22A, 22B) to operate at the propeller blade pitch, the rotation speed, and the torque corresponding to the maximum efficiency within operating limits of the at least one first electric motor (36); and
controlling the electric propulsion system (24) to generate a target thrust of the aircraft propulsion assembly (20) in combination with the hybrid-electric propulsion system (22, 22A, 22B) operating at the propeller blade pitch, the rotation speed, and the torque corresponding to the maximum efficiency.

14. The method of any of claims 8 to 12, wherein controlling the aircraft propulsion assembly (20), at the controller (28), in the second flight mode includes:
determining a thrust output to electric power consumption ratio of the hybrid-electric propulsion system (22, 22A, 22B);
controlling a propeller blade pitch of the first propulsor (38) to operate the hybrid-electric propulsion system (22, 22A, 22B) at a maximum value of the thrust output to electric power consumption ratio; and
controlling the electric propulsion system (24) to generate a target thrust of the aircraft propulsion assembly (20) in combination with the hybrid-electric propulsion system (22, 22A, 22B) operating at the maximum value of the thrust output to electric power consumption ratio.

15. The method of any of claims 8 to 12, wherein controlling the aircraft propulsion assembly (20), at the controller (28), in the second flight mode includes:
determining a thrust output to electric power consumption ratio of the hybrid-electric propulsion system (22, 22A, 22B) and the electric propulsion system (24); and
controlling the at least one first electric motor (36) and the second electric motor (76) to operate the hybrid-electric propulsion system (22, 22A, 22B) and the electric propulsion system (24), at a maximum value of the thrust output to electric power consumption ratio, within operating limits of the at least one first electric motor (36) and the second electric motor (76).
